# EUROPEAN PATENT APPLICATION

(11) **EP 4 596 339 A1**
(43) Date of publication of application: **06.08.2025**
(21) Application number: 23872428.0
(22) Date of filing: 27.09.2023
(51) Int. Cl.: B60S 1/38, B26D 1/04, B26D 3/00, B26D 7/02, B26D 7/08

(54) **BLADE RUBBER REGENERATION DEVICE, BLADE RUBBER REGENERATION METHOD, AND METHOD FOR MANUFACTURING REGENERATED BLADE RUBBER**

(30) Priority: 29.09.2022 JP 2022156513; 22.12.2022 JP 2022205755; 07.09.2023 JP 2023145277
(71) Applicant: CANON KABUSHIKI KAISHA, Tokyo 146-8501 (JP)
(72) Inventor: KODAMA, Katsuya, Tokyo 146-8501 (JP); MATSUDA, Hidekazu, Tokyo 146-8501 (JP); AOYAMA, Takehiko, Tokyo 146-8501 (JP); MIZUNUMA, Takayuki, Tokyo 146-8501 (JP)
(74) Representative: TBK
(86) International application number: PCT/JP2023/035161
(87) International publication number: WO 2024/071206

(57) **Abstract**

A blade-rubber regeneration device is provided, which is capable of regenerating a blade rubber, whose wiping performance lowered, with higher accuracy. This is a blade-rubber regeneration device including a blade portion for cutting off the tip end of a lip portion of the blade rubber in a longitudinal direction of the blade rubber, the regeneration device cutting off a part of the tip end of the lip portion by relatively moving the blade portion from an end part A, which is one of end parts in the longitudinal direction of the blade rubber toward an end part B, which is the other end part, and the regeneration device including a sandwiching member of sandwiching the lip portion.

## Description

### TECHNICAL FIELD

The present disclosure relates to a blade-rubber regeneration device, a blade-rubber regeneration method, and a manufacturing method of a regenerated blade rubber used for a wiper blade in a wiper which cleans a wiping target object such as a windshield of a vehicle such as an automobile, a railroad vehicle, an aircraft, a ship and the like (hereinafter, also referred to simply as a "vehicle").

### BACKGROUND ART

In a blade rubber in a wiper blade for a vehicle, a contact part that contacts with a windshield at a tip end is worn gradually by use for a long time, which causes irregular wiping or the like. A regeneration cutter for regenerating the blade rubber tip-end, whose wiping performance has lowered by the long-time use of the wiper blade, by cutting off the blade rubber tip-end is disclosed in PTL 1.

### CITATION LIST

### PATENT LITERATURE

[PTL 1] Japanese Patent Application Publication No. 2006-174980

### SUMMARY OF INVENTION

### TECHNICAL PROBLEM

However, according to the examination by the inventors, the wiping performance of the wiper blade regenerated by the cutter for wiper-blade regeneration according to PTL 1 is not satisfactory at all. Recently, in an automobile, for example, a driving assistance system using a car-mounted camera has been brought into practical use, and development of an automated driving system is also promoted. Hence, at this time, in order to prevent the car-mounted camera from erroneously recognizing stains that adhere to the windshield, a considerably higher wiping performance is in demand for the wiper blades.

Thus, at least one aspect of the present disclosure is to provide a blade-rubber regeneration device which can regenerate a blade rubber, whose wiping performance has lowered, with higher accuracy. Moreover, at least one aspect of the present disclosure is to provide a blade-rubber regeneration method for regenerating a wiping performance of a blade rubber whose wiping performance has lowered. Furthermore, at least one aspect of the present disclosure is to provide a manufacturing method of a regenerated blade rubber whose wiping performance is at the same degree as that of a brand-new product.

### SOLUTION TO PROBLEM

At least one aspect of the present disclosure provides a blade-rubber regeneration device, the blade rubber being provided on a wiper blade used for a wiper device of a windshield of a vehicle, wherein
the wiper blade comprises the blade rubber and a blade stay that supports the blade rubber,
the blade rubber comprises a base part, which is an attaching part of attaching the blade rubber to the blade stay, a lip portion, and a neck portion swingably connecting the lip portion to the base part,
at least a part of a tip end of the lip portion constitutes a contact part contacting with the windshield,
the regeneration device comprises a blade portion for cutting off the tip end of the lip portion in a longitudinal direction of the blade rubber,
the regeneration device cuts off a part of the tip end of the lip portion by causing the blade portion to enter the lip portion from a side portion of the tip end of the lip portion at an end part A, which is one of end parts in the longitudinal direction of the blade rubber, and to relatively move toward an end part B, which is the other end part in the longitudinal direction,
the regeneration device comprises a sandwiching member of sandwiching the lip portion,
the sandwiching member sandwiches at least a part of the lip portion from both side portions of the lip portion on a sectional view in a direction orthogonal to the longitudinal direction of the blade rubber, and
the sandwiching member is disposed at a position capable of sandwiching at least a part, into which the blade portion of the lip portion enters, and the position of the sandwiching member with respect to the blade rubber is fixed.

At least one aspect of the present disclosure provides a blade-rubber regeneration method, the blade rubber being provided in a wiper blade used for a wiper device of a windshield in a vehicle,
the method comprising:
a process of fixing the blade rubber to the above regeneration device; and
a process of cutting off a part of a tip end of a lip portion the blade rubber by the regeneration device.

At least one aspect of the present disclosure provides a manufacturing method of a regenerated blade rubber for regenerating a blade rubber provided in a wiper blade used for a wiper device of a windshield in a vehicle,
the method comprising:
a process of fixing the blade rubber to the above regeneration device,
a process of obtaining the regenerated blade rubber by cutting off a part of a tip end of a lip portion of the blade rubber by the regeneration device.

### ADVANTAGEOUS EFFECTS OF INVENTION

According to at least one aspect of the present disclosure, a blade-rubber regeneration device that can regenerate a blade rubber whose wiping performance has lowered with higher accuracy can be provided. Moreover, according to at least one aspect of the present disclosure, a blade-rubber regeneration method that can recover the wiping performance of the blade rubber whose wiping performance has lowered can be provided. According to at least one aspect of the present disclosure, a manufacturing method of a regenerated blade rubber indicating a wiping performance similar to that of a brand-new blade rubber can be provided.

### BRIEF DESCRIPTION OF DRAWINGS

[Fig. 1]

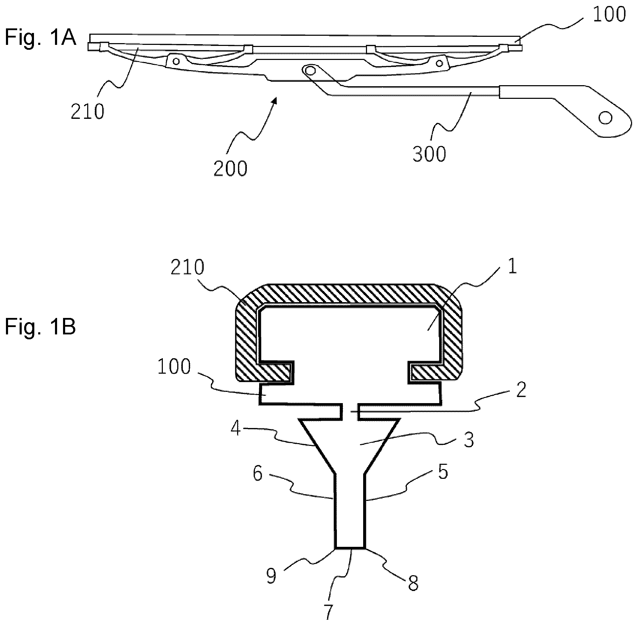

   Fig. 1A and Fig. 1B are schematic diagrams of a wiper blade and a blade rubber.
[Fig. 2]

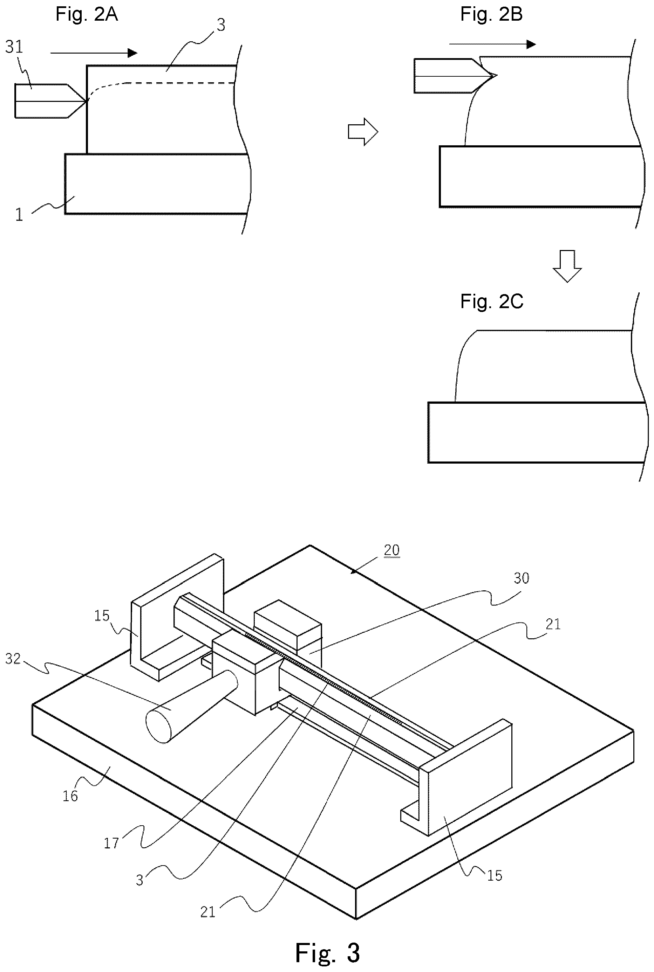

   Fig. 2A, Fig. 2B and Fig. 2C are diagrams for explaining deformation of a lip portion.
[Fig. 3]
   Fig. 3 is a schematic diagram of a blade- rubber regeneration device.
[Fig. 4]

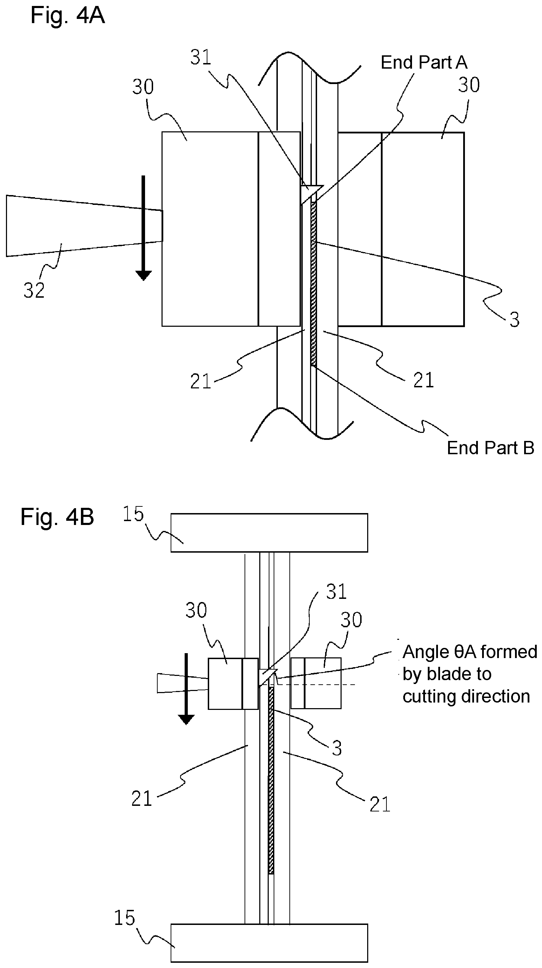

   Fig. 4A and Fig. 4B are schematic diagrams for explaining a cutting unit.
[Fig. 5]

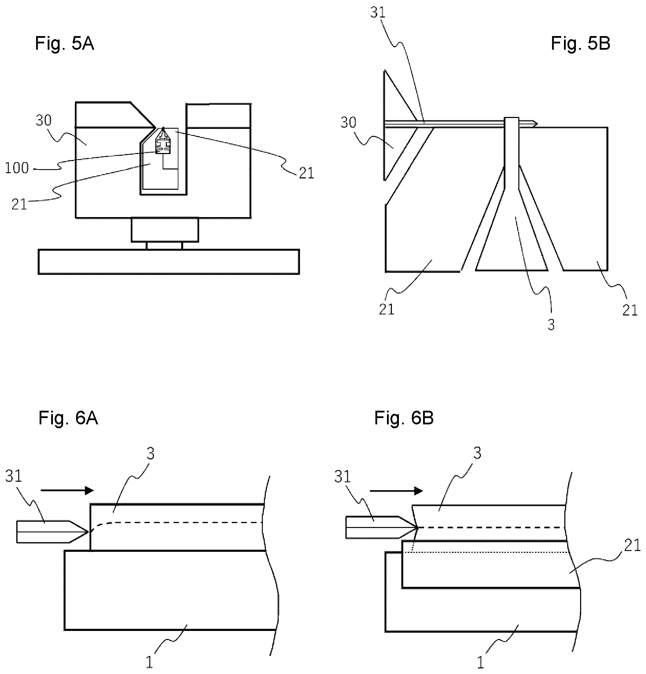

   Fig. 5A and Fig. 5B are schematic diagrams for explaining the cutting unit and a sandwiching member.
[Fig. 6]
   Fig. 6A and Fig. 6B are diagrams for explaining the sandwiching member.
[Fig. 7]

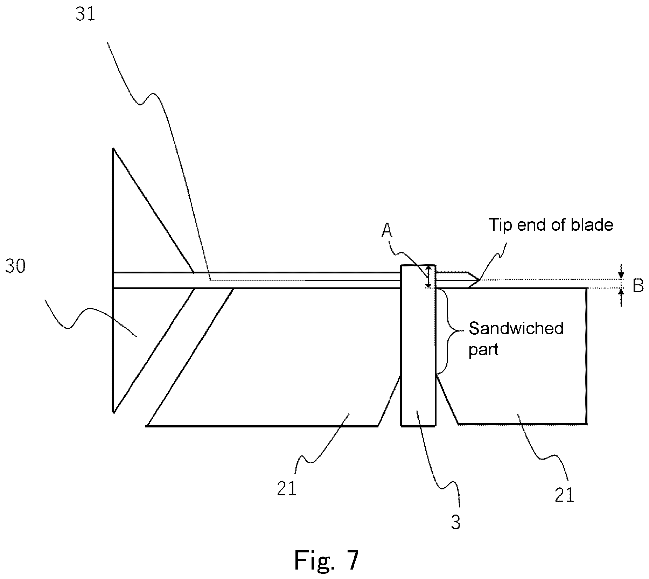

   Fig. 7 is a diagram that further enlarges a surrounding of a tip end of a blade portion and the lip portion.

### DESCRIPTION OF EMBODIMENTS

In the present disclosure, "from XX to YY" or "XX to YY" indicating a numerical range means a numerical range including a lower limit and an upper limit that are end points unless otherwise specified. In a case where numerical ranges are described in stages, an upper limit and a lower limit of each numerical range can be combined as desired.

Hereinafter, embodiments for carrying out this disclosure will be specifically illustrated with reference to the drawings. However, the dimensions, materials, shapes, and relative arrangement of the components described in this mode are to be changed as appropriate depending on the configuration of the members to which the disclosure is applied and various conditions. That is, the scope of this disclosure is not intended to be limited to the following embodiments. Also, in the following description, components having the same functions are denoted by the same numbers in the drawings, and description thereof is omitted in some cases.

A wiper device can be used for a wiping target object such as transport equipment including a vehicle, an aircraft, a ship and the like represented by an automobile, industrial and mechanical equipment including a construction machine and the like. These transport equipment and industrial mechanical equipment are also collectively called vehicles in the following. The wiper device can be applied to a windshield of a vehicle. The windshield is not limited to a front window but includes side windows and a rear window.

In addition, the wiper device including a wiper blade can be used also for wiping target objects such as a lens device of a network camera and the like, a protective glass surface of an imaging device and the like. In the following, the wiper blade for a vehicle windshield will be explained as an example, but the wiper blade is not limited to that.

As shown in Fig. 1A, for example, the wiper device includes a wiper arm 300, and a wiper blade 200 attached to the wiper arm 300. The wiper arm 300 is cooperated with a driving motor (not shown), for example. And the wiper blade 200 has a blade rubber 100 and a blade stay 210 which supports the blade rubber 100. For the blade stay 210, besides a tournament type as shown in Fig. 1A, various publicly-known formats of support members such as a flat type can be adopted.

The blade rubber 100 is, as shown in Fig. 1B, includes a base part 1, which is an attaching part to the blade stay 210 of the blade rubber 100 and a lip portion 3 swingably coupled to the base part 1 through a neck portion 2. The wiper blade is formed having a sectional shape substantially uniform in a longitudinal direction.

On a section in a direction orthogonal to the longitudinal direction of the wiper blade, the lip portion 3 includes a shoulder portion extending to a side farther than the neck portion on an end part on the neck portion side of the lip portion 3. Moreover, for stabilization of a contact attitude of the wiper blade, a taper portion 4 whose width is gradually reduced in a direction away from the base part 1 from the side close to the base part 1 may be provided. In addition, a degree of gradual reduction in the width of the taper portion 4 may be changed in steps. For example, the lip portion 3 may have a lip tip-end part in which a degree of gradual reduction in the width of the taper portion is made smaller on a side close to the tip end away from the base part 1 of the lip portion. In addition, on the lip tip-end part, a part whose width is the same or substantially the same from the side close to the base part 1 toward the tip end may be provided. The wiper blade shown in Fig. 1B has a plate-shaped part continuing to the taper portion 4 on the tip-end side of the lip portion 3.

The wiper device cleans a surface of a member to be cleaned by bringing at least a part of a tip end of the lip portion 3 into contact with the surface of the windshield, which is the member to be cleaned represented by a glass surface. As a result, at least a part of the tip end of the lip portion 3 constitutes a contact part with the windshield. In the lip portion 3, the contact part is formed by extending in the longitudinal direction of the blade rubber.

For example, on the section in the direction orthogonal to the longitudinal direction of the wiper blade, such an aspect is cited that the neck portion 2 has a width smaller with respect to the base part 1 and the lip portion 3. In addition, for example, the lip portion is an elastic body. As a result, the lip portion 3 is inclined to a wiping direction and has at least a part of the lip portion 3 brought into contact with the surface of the member to be cleaned.

As shown in Fig. 1B, the lip portion 3 has a first side surface 5 continuing from the taper portion 4 and a second side surface 6 on a side opposite to the first side surface 5 and a tip-end surface 7 constituting a first edge 8 and a second edge 9 on a side the farthest from the base part 1 of the lip portion 3 together with the first side surface 5 and the second side surface 6. A part of the tip end of the lip portion 3 cut off by the regeneration device is a part including at least the tip-end surface 7. For example, the tip end of the lip portion 3 may be cut off in parallel to the tip-end surface 7 so as to form a new tip-end surface.

As described above, the contact part of the lip portion 3 with the windshield is worn by the use for a long time, and irregular wiping or the like would occur. PTL 1 discloses a regeneration cutter for cutting off the tip end of the lip portion and regenerating a blade rubber. However, the regenerated wiper blade regenerated by the regeneration cutter according to PTL 1 had the wiping performance lower than the wiping performance of a brand-new product of the wiper blade. Specifically, irregular wiping could be generated at the end part or the like. The reason can be considered to be as follows.

The blade rubber is formed of a natural rubber or a synthetic rubber, which is usually soft. And when the tip-end part of the soft blade rubber was cut off by the regeneration cutter according to PTL 1, in an initial process of cutting, there were such cases that the cut surface of the lip portion of the blade rubber was deformed.

Specifically, at the cutting, a blade portion 31 of the regeneration cutter is brought into contact with a side surface on one end side of the lip portion 3 of the blade rubber (see Fig. 2A) and then, the blade portion 31 is made to enter into the lip portion 3. At this time, the side surface of the lip portion 3 could be elastically deformed as shown in Fig. 2B by a pressure of the blade portion 31 at the entry. As a result, as shown in Fig. 2C, the end part of the blade rubber after the cutting became an R-surface in some cases. Since the regenerated blade rubber having the shape as above has an R-surface at an end part on the side where the blade portion enters, there is a possibility that irregular wiping could be incurred on the end surface.

As described above, in the initial process of the cutting, there was a reason why the shape of the tip-end part of the regenerated blade rubber is deformed. The inventors made examination so as to prevent the deformation of the cut surface in a manufacturing process of the regenerated blade rubber, that is, in the initial process of the cutting of the blade rubber, to be able to regenerate a blade rubber with higher accuracy and to obtain a regenerated wiper blade whose wiping performance is as good as that of a brand-new blade rubber. As a result, the following blade-rubber regeneration device, blade-rubber regeneration method, and manufacturing method of a regenerated wiper blade were found.

An aspect of a blade-rubber regeneration device according to the present disclosure is a blade rubber regeneration device, the blade rubber being provided on a wiper blade used in a wiper device of a wind shield of a vehicle, wherein
the wiper blade comprises the blade rubber and a blade stay that supports the blade rubber,
the blade rubber comprises a base part, which is an attaching part of the blade rubber to the blade stay, a lip portion, and a neck portion swingably connecting the lip portion to the base part,
at least a part of a tip end of the lip portion constitutes a contact part contacting with the windshield,
the regeneration device comprises a blade portion for cutting off the tip end of the lip portion in a longitudinal direction of the blade rubber,
the regeneration device cuts off a part of the tip end of the lip portion by causing the blade portion to enter the lip portion from a side portion of the tip end of the lip portion at an end part A, which is one of end parts in the longitudinal direction of the blade rubber, and to relatively move toward an end part B, which is the other end part in the longitudinal direction,
the regeneration device comprises a sandwiching member of sandwiching the lip portion;
the sandwiching member sandwiches at least a part of the lip portion from both side portions of the lip portion on a sectional view in a direction orthogonal to the longitudinal direction of the blade rubber, and
the sandwiching member is disposed at a position capable of sandwiching at least a part, into which the blade portion of the lip portion enters, and the position of the sandwiching member with respect to the blade rubber is fixed.

A blade-rubber regeneration device according to an aspect of this disclosure will be explained with Figs. 3, 4A, 4B, 5A, 5B, 6A, 6B and 7 as examples. Fig. 3 is a schematic diagram illustrating an appearance of a regeneration device 20 of a blade rubber. Figs. 4A and 4B are schematic diagrams for explaining a cutting unit 30 including a blade portion and a motion of the cutting. Fig. 5A is a sectional diagram of a blade-rubber shorter-side direction of the cutting unit 30 and a sandwiching member 21, and Fig. 5B is an enlarged view in the vicinity of a blade portion 31.

The blade-rubber regeneration device 20 includes the sandwiching member 21 of the lip portion as a blade-rubber fixing member for fixing the blade rubber 100. The sandwiching member 21 fixes the blade rubber by sandwiching the lip portion 3 from the shorter-side direction of the blade rubber. For example, the first side surface 5 and the second side surface 6 in Fig. 1B are sandwiched. That is, the sandwiching member 21 is for sandwiching the lip portion 3 from the both side parts of the lip portion 3 on a cross-sectional view in a direction orthogonal to the longitudinal direction of the blade rubber.

In Fig. 3, the sandwiching member 21 is fixed onto a pedestal 16 by a holding member 15 having an L-shaped section from the longitudinal direction of the blade rubber.

The sandwiching member 21 is, as shown in Fig. 5B (enlarged view of the right side) and Fig. 6B, disposed at a position capable of sandwiching at least a part (end part A) into which the blade portion 31 enters with respect to the lip portion 3. In the drawing, the sandwiching member 21 sandwiches the whole region in the longitudinal direction of the lip portion 3 including a part into which the blade portion 31 enters from the both side parts. And the position of the sandwiching member with respect to the blade rubber is fixed.

Note that an aspect in which the blade rubber is applied to the regeneration device is not particularly limited. As in Fig. 5A, the blade rubber removed from the blade stay may be attached to the regeneration device, or the blade rubber with the blade stay attached may be attached to the regeneration device.

The blade-rubber regeneration device 20 includes the blade portion 31 for cutting off the tip end of the lip portion 3 in the longitudinal direction of the blade rubber 100. For example, as in Figs. 3, 4A, and 4B, the blade-rubber regeneration device 20 includes the cutting unit 30 and may have the blade portion 31 (not shown in Fig. 3) in the cutting unit 30.

The cutting unit 30 is movable along the longitudinal direction of the blade rubber 100 and the sandwiching member 21. In Fig. 3, the cutting unit 30 can move along a rail 17 which guides the movement. For example, in Fig. 3 by means of a handle 32, the cutting unit 30 is movable manually but may be drivable not manually but by an electric cylinder, a motor or the like.

Note that, to facilitate movement of the cutting unit 30, the cutting unit 30 and the sandwiching member 21 may be non-contact.

Figs. 4A and 4B are bird's eye views from an upper part of the device of the cutting unit 30 in the blade-rubber regeneration device 20. Fig. 4A is an enlarged diagram of the vicinity of the cutting unit 30, and Fig. 4B is a diagram of the whole of the blade rubber in the longitudinal direction including the sandwiching member 21. The cutting unit 30 including the blade portion 31 moves in a direction of an arrow in the drawing from the end part A to a direction of the end part B along the longitudinal direction of the blade rubber 100.

And the blade portion 31 is made to enter the lip portion 3 from the side portion of the tip end of the lip portion 3 in the end part A, which is one of end parts in the longitudinal direction of the blade rubber 100, is relatively moved toward the end part B, which is the other end part in the longitudinal direction, and a part of the tip end of the lip portion 3 is cut off. By performing the cutting as above, a worn / deteriorated part is removed, and the regenerated blade rubber can be obtained.

The regeneration device 20 shown in Fig. 4A and Fig. 4B is in such an aspect that the blade portion 31 (cutting unit 30) moves, but the regeneration device according to the present disclosure is not limited to the aspect as above, but it is only necessary to be constituted such that the blade portion 31 can relatively move from the end part A to the end part B. For example, it may be such a constitution that the cutting unit 30 including the blade portion 31 is fixed, and the sandwiching member 21 to which the blade rubber 100 is fixed moves with respect to the cutting unit 30. In addition, the blade portion 31 preferably moves so as to cut off the first edge 8, the second edge 9, and the tip-end surface 7. That is, at least a part of the contact part to be removed preferably includes the tip-end surface 7 and the tip-end side edges 8, 9 of the lip portion 3. Preferably, the blade portion 31 is constituted capable of cutting off the lip portion 3 so that a new tip-end surface to be formed by the cutting becomes parallel to the tip-end surface 7 to be cut.

The inventors consider the reason why, by means of the regeneration device 20 of the aforementioned blade rubber, the deformation of the cut surface of the lip portion 3 is suppressed, and the regenerated blade rubber with a higher accuracy can be obtained as follows.

The suppression of the deformation at the beginning of the cutting will be explained. The regeneration device 20 includes the sandwiching member 21 that sandwiches the lip portion 3 from the both side parts in the shorter-side direction of the lip portion 3. And the sandwiching member 21 is disposed at a position capable of sandwiching at least the part where the blade portion 31 enters the lip portion 3, and the position of the sandwiching member with respect to the blade rubber is fixed. That is, unlike the cutter in PTL 1, in the regeneration device 20, the sandwiching member 21 does not move with respect to the blade rubber even by the movement of the blade portion 31 but sandwiches the lip portion 3.

As described above, it is considered that, by sandwiching the part into which the blade portion 31 of the lip portion 3 enters, the elastic deformation of the lip portion 3 by the pressure when the blade portion 31 is made to enter the side part of the lip portion 3 is suppressed. Thus, in the lip portion, the end part on an entry part side of the blade portion 31 after the cutting can be suppressed from becoming an R surface.

For example, if the sandwiching member 21 is not present, as in Fig. 2C and Fig. 6A, the end part on the entry-part side of the blade portion 31 can become the R surface by the elastic deformation of the lip portion 3 as indicated by a broken line in some cases. In addition, if a thickness (cutting margin) of the cutting is particularly small, the act itself to make the blade portion 31 enter into the lip portion 3 by the elastic deformation of the lip portion 3 caused by the pressure when the blade portion 31 is made to enter the side surface of the lip portion 3 becomes difficult in some cases. On the other hand, if the sandwiching member 21 sandwiching the lip portion 3 from the both side surfaces is present, the deformation of the cut surface can be suppressed as indicated by the broken line in Fig. 6B. This is considered to be such that the excessive elastic deformation of the lip portion 3 is suppressed at the entry of the blade portion into the lip portion 3, and the pressure is applied uniformly to the lip portion 3.

Note that, in order to suppress the deformation of the entry part of the blade portion 31, it is only necessary for the sandwiching member 21 to sandwich at least the part where the blade portion 31 enters. The sandwiching member 21 may sandwich the lip portion 3 over the whole region in the longitudinal direction of the lip portion 3 as shown in Figs. 4A and 4B.

As described above, by using the sandwiching member, the elastic deformation of the lip portion when the blade portion enters the lip portion can be suppressed, and it is considered that the deformation of the cut surface of the lip portion can be suppressed. Thus, the cut surface can be prevented from becoming the R-shape as shown in Figs. 2C and 6A can be suppressed, and the blade rubber can be regenerated with higher accuracy.

In addition, as a cutting method, refrigerated cutting in which the elasticity of the lip portion is eliminated or lowered, laser cutting for cutting before occurrence of the elastic deformation by extremely raising a cutting power, and a waterjet cutting can be considered. However, according to the aforementioned regeneration device 20, as compared with the cutting methods as above, the device cost is kept low and a high mass-productivity and regeneration with high accuracy can be made possible.

Hereinafter, each constitution of the regeneration device 20 of the blade rubber will be explained.

The regeneration device 20 includes the blade portion 31. A blade used for the blade portion 31 only needs to cut off the lip portion by relative movement. An angle formed by the blade (blade angle θA) with respect to the shorter-side direction of the lip portion 3 of the blade is not particularly limited, and it is only necessary to provide the blade portion 31 in the regeneration device 20 so that the angle is preferably 20 to 70°, more preferably 30 to 60° or further preferably 40 to 50°. Figs. 4A and 4B are examples in which the angle θA becomes 45°.

On a sectional view in the longitudinal direction of the blade rubber of the regeneration device 20, an angle θB (not shown) formed by the longitudinal direction (the device horizontal surface, for example) of the lip portion 3 and a direction perpendicular to a blade length direction of the blade and parallel to a blade body is, assuming that a case where a blade edge is directed to the base part 1 side as +, preferably 0 to 10°, more preferably 2 to 8°, or further preferably 3 to 7°. When the formed angle θB is within the aforementioned range, it means that the blade is slightly tilted to the base part 1 side of the blade rubber. As a result, the cut pieces can be easily made to escape to the side opposite to the advancing direction of the blade portion.

The blade may be a double edge or a single edge. In the regeneration device 20 shown in Fig. 3 and the like, the double edge is used as the blade 31.

A blade thickness is not particularly limited but is preferably 0.05 to 0.50 mm or more preferably 0.10 to 0.30 mm.

A tip-end angle of the blade (blade-edge angle) is not particularly limited, either, and is preferably 15 to 55°, more preferably 25 to 50° or further preferably 35 to 45°. Within the aforementioned range, the lip portion can be easily cut off appropriately. The illustrated regeneration device 20 is an example of 45°.

The blade portion 31 only needs to be fixed to the regeneration device 20 (cutting unit 30) by such a force that the angle of the blade does not change during the cutting. For example, it may be fastened by a bolt or the like. The blade portion 31 may be fixed to one side as shown in Fig. 4A. The blade portion 31 may be fixed to both side portions across the lip portion when the regeneration device 20 is viewed from the side of the lip-portion tip end part (upper side of the device, for example) by placing the blade portion 31 across the left and right cutting units 30 in Fig. 4A, for example. As a result, the cutting accuracy is further improved.

A feeding speed of the blade (that is, a speed of the aforementioned relative movement) in the regeneration device 20 is not particularly limited as long as it is in such a range that the lip portion 3 can be appropriately cut off and is preferably 500 to 5000 mm/sec, more preferably 800 to 2000 mm/sec or further preferably 900 to 1500 mm/sec.

A slice width of the lip portion 3 cut off by the blade portion 31 is not particularly limited, either, and it accords to a size of the lip portion of the blade rubber to be used. The slice width (a length of the lip portion in the shorter-side direction of the blade rubber in the part to be cut (the length between the first side surface 5 and the second side surface 6)) is preferably 0.1 to 5.0 mm, 0.2 to 2.0 mm, 0.3 to 1.0 mm or the like. A material of the blade portion 31 is not particularly limited but publicly known materials can be used as appropriate in accordance with the blade rubber to be cut. For example, stainless steel, iron or the like can be used.

The regeneration device 20 includes the sandwiching member 21 that sandwiches at least a part of the lip portion 3 from the both side portions of the lip portion 3. The sandwiching member 21 sandwiches and fixes the lip portion 3 and suppresses the elastic deformation caused by the entry of the blade portion. The sandwiching member 21 only needs to be disposed at a position capable of sandwiching the part into which the blade portion 31 of the lip portion enters. The part where the blade portion enters means a part where the elastic deformation of the lip portion by the entry of the blade portion can be suppressed by sandwiching in the vicinity of the contact point between the blade portion and the lip portion. For example, it is a part in the vicinity of the position where the blade portion enters and elastically deformed by the entry of the blade portion when the both side portions of the lip portion are not sandwiched.

The sandwiching member 21 may sandwich the entire lip portion. For example, the sandwiching member 21 can sandwich and fix the whole region in the longitudinal direction of the lip portion from the both side portions by a member sufficiently longer than the length in the longitudinal direction of the blade rubber 100 as shown in Figs. 4A and 4B. In addition, for example, the sandwiching member 21 sandwiches the base part 1 side rather than the position where the blade portion 31 enters.

The material of the sandwiching member 21 is not particularly limited, and publicly known materials such as steel materials including a prehardened steel, stainless steel, aluminum and the like can be adopted.

A pressing force when the lip portion 3 is sandwiched and fixed by the sandwiching member 21 is not particularly limited but can be changed as appropriate in accordance with the material of the blade rubber. The fixation only needs to be performed with a force of such a degree that the lip portion 3 is fixed and the elastic deformation by the entry of the blade portion 31 can be suppressed. In addition, the fixation may be performed with a force of such a degree that the lip portion is not deformed unnecessarily by the sandwiching. A method of fixing is not particularly limited, and publicly known methods such as fastening with a bolt or the like can be adopted.

For example, as a fastening force of a bolt when the lip portion is sandwiched by fastening the sandwiching member 21 with a bolt, 5.0 to 50.0 N/m, 10.0 to 30.0 N/m, or 12.0 to 20.0 N/m can be preferably cited. For example, the sandwiching member 21 preferably sandwiches a position corresponding to the part where the blade portion enters with the aforementioned fastening force.

Fig. 7 is a diagram obtained by further enlarging a periphery of the tip end of the lip portion 3 in Fig. 5B, which is a sectional diagram in the blade-rubber shorter-side direction of the cutting unit 30 and the sandwiching member 21. It is assumed that a part where the lip portion 3 is sandwiched by the sandwiching member 21 is a sandwiched part, and a length of a part where the tip end of the lip portion 3 protrudes from the sandwiched part to an outer side of the sandwiching member 21 is a protruding length A of the lip portion.

From a viewpoint that the elastic deformation of the lip portion 3 can be suppressed more easily, A is preferably 0.10 to 1.00 mm, more preferably 0.20 to 0.50 mm, and further preferably 0.30 to 0.40 mm.

In addition, as shown in Fig. 7, a length (shortest distance) from the sandwiched part of the lip portion by the sandwiching member 21 to the tip end of the blade is assumed to be a length B. From the viewpoint that the elastic deformation of the lip portion 3 can be suppressed more easily, B is preferably 0.200 mm or less, more preferably 0.150 mm or less, and further preferably 0.130 mm or less. A lower limit is better if it is smaller, but in order to prevent interference between the blade and the sandwiched part, a length exceeding 0.000 mm is desirable.

B is preferably exceeding 0.000 mm and 0.200 mm or less, exceeding 0.000 mm and 0.150 mm or less, exceeding 0.000 mm and 0.130 mm or less can be cited.

In addition, from the viewpoint that the elastic deformation of the lip portion 3 can be suppressed more easily, a value of B/A is preferably 0.10 to 0.55, more preferably 0.20 to 0.45, or further preferably 0.30 to 0.40.

In addition, a cutting thickness of the tip end of the lip portion 3 corresponding to A-B in Fig. 7 (length in the tip-end direction of the base part - lip portion of the blade rubber) may be changed as appropriate in accordance with a purpose of the regeneration, a length of the lip portion before the regeneration, and a degree of deterioration of the lip portion and is not particularly limited. The cutting thickness is preferably 0.05 to 1.00 mm or more preferably 0.10 to 0.50 mm.

The wiper blade or the blade rubber regenerated by the regeneration device is not particularly limited but publicly-known wiper blades or blade rubber can be used. For example, natural rubber, isoprene rubber, chloroprene rubber, ethylene-propylene-diene rubber, acrylonitrile-butadiene rubber, silicone rubber, fluororubber, chlorosulfonated polyethylene rubber, butyl rubber, styrene-butadiene rubber, butadiene rubber, ethylene acrylate rubber, polyurethane, EVA resin and the like can be cited.

The blade rubber may be surface-treated by publicly known methods such as water-repellant coating, graphite coating or the like.

The Wallace hardness of the blade rubber is not particularly limited but it is preferably 45 to 85 degrees or more preferably 70 to 85 degrees. Within the range as above, the elastic deformation of the lip portion can be suppressed more easily. The Wallace hardness can be acquired by executing measurement in accordance with Japan Industrial Standard (JIS) K6253-2:2012 by using Wallace micro hardness-meter (by Wallace Instruments Limited) as a measurement instrument.

The length in the longitudinal direction of the blade rubber, the thickness of the lip portion and the like are not particularly limited but those within a publicly-known range can be used.

### Examples

In the following, the present invention will be specifically explained by using Examples. Note that the present invention is not limited to the following Examples. In the following prescription, parts comply with a mass basis unless otherwise noted.

### <Blade Rubber>

The following blade rubber sold in the market was used.

The length in the longitudinal direction of the blade rubber: 450 mm (graphite coated product)
Manufacturer: Nippon Wiper Blade, Inc.
Model number: SW1G
Wallace hardness: 56 degrees

### [Example 1]

### < Blade-Rubber Regeneration Device>

As the blade-rubber regeneration device according to this Example, the one in an aspect explained as the aforementioned aspect in Figs. 3, 4A, 4B, 5A, 5B, 6A, 6B, and 7 was prepared. More specifically, the following was prepared. The length between the holding members 15 was set to 1000 mm.

### (Blade Portion 31)

By using the following blade, it was fixed to the cutting unit 30 so as to have the following angles A and B.
Type of blade: High-speed steel (SKH material) (Product name, Material), double-edged, tip-end angle (blade-edge angle) 45°, three-times polishing (DLC coated product), blade thickness: 0.25 mm
Blade angle θA: 45°
Angle of blade with respect to jig horizontal surface (formed angle θB): 5°
Pressing of blade: the blade was sandwiched in the cutting unit 30 as in Fig. 5B, and the both side portions of the blade were fastened by bolts.

### (Sandwiching Member 21)

The sandwiching member was as follows, and the blade rubber was fixed in accordance with the blade portion 31 so as to have the following slide width, protruding length A and length B.
Material of the sandwiching member 21: Free-machining prehardened steel (item number: NAK55)
- Pressing force: 14.7 N/m (sandwiching by fastening by an M3 bolt with this fastening force)
- Slice width: 0.7 mm
- Protruding length A: 0.35 mm
- Length B (length from the sandwiched part to the tip end of the blade): 0.125 mm

### (Cutting)

As described above, in the regeneration device 20 in which the blade rubber is fixed, by moving the cutting unit 30 by using a robo cylinder (item number: RCS3-CT8C, by IAI CORPORATION) so that the feeding speed of the blade becomes 1000 mm/sec, the lip portion was cut from the end part A to the end part B, and the regenerated blade rubber was obtained.

### [Comparative Example 1]

In Example 1, the pressing force of the sandwiching member 21 was set to 0 N/m. Similarly to Example 1 other than that, a regenerated blade rubber was obtained.

### [Comparative Example 2]

In Example 1, the pressing force of the sandwiching member 21 was set to 0 N/m, the protruding length A to 2 mm, and the length B to 0.125 mm. Similarly to Example 1 other than that, a regenerated blade rubber was obtained.

### (Evaluation)

The obtained regenerated blade rubber was evaluated by the following procedure.

The cutting unit 30 was removed from the regeneration device used for the cutting, and such a state was brought about that no object was present above the cut surface in the vertical direction of the regenerated blade rubber. Then, a super high-speed / high-accuracy laser dimension-measuring instrument (item number: LS-9030, by Keyence Corporation, maximum measurement range: 30 mm) was placed on the surface of the flat plate 16 of the regeneration device so that the regenerated blade rubber was located between a laser-light projecting part and a light receiving part of the high-speed / high-accuracy laser dimension-measuring instrument.

At this time, a distance between a reference position for the distance measurement of the high-speed / high-accuracy laser measuring instrument and a surface of a flat plate 16 was adjusted so that all the cut surfaces in the longitudinal direction were located below the reference position in the vertical direction. Then, the high-speed / high-accuracy laser measuring instrument was moved parallel to the longitudinal direction of the regenerated blade rubber, and distances (heights) from the reference position of the cut surface at the end part A of the regenerated blade rubber and a position of 10 mm in the end-part B direction (inner side) from the end part A were measured.

### [Table 1]

**Table 1**

| | Height (mm) | |
|---|---|---|
| | End part A | Inner side by 10 mm from end part A |
| Example 1 | 10.000 | 9.915 |
| Comparative Example 1*¹ | - | - |
| Comparative Example 2 | 10.000 | 9.007 |

| | | |
|---|---|---|
| *1: In Comparative Example 1, the blade could not be made to enter the side surface on the blade-rubber end-part A side. The reason why the blade could not be made to enter the side surface is considered to be that a thickness of a part to be cut off (cutting margin) was small. | | |

In Example 1, a difference between the height at the end part A and the height at a position at which the cutting was progressed by 10 mm from the end part A to the inside is slight, and the cut surface hardly became the R-surface. In Comparative Example 2, the height at a position at which the cutting was progressed by 10 mm from the end part A to the inside is smaller than the height at the end part A, and the cut surface became the R-surface.

This disclosure is related to the following configurations and methods.

### (Configuration 1)

A blade-rubber regeneration device, the blade rubber being provided on a wiper blade used for a wiper device of a windshield of a vehicle, wherein
the wiper blade comprises the blade rubber and a blade stay that supports the blade rubber,
the blade rubber comprises a base part, which is an attaching part of attaching the blade rubber to the blade stay, a lip portion, and a neck portion swingably connecting the lip portion to the base part,
at least a part of a tip end of the lip portion constitutes a contact part contacting with the windshield,
the regeneration device comprises a blade portion for cutting off the tip end of the lip portion in a longitudinal direction of the blade rubber,
the regeneration device cuts off a part of the tip end of the lip portion by causing the blade portion to enter the lip portion from a side portion of the tip end of the lip portion at an end part A, which is one of end parts in the longitudinal direction of the blade rubber, and to relatively move toward an end part B, which is the other end part in the longitudinal direction,
the regeneration device comprises a sandwiching member of sandwiching the lip portion,
the sandwiching member sandwiches at least a part of the lip portion from both side portions of the lip portion on a sectional view in a direction orthogonal to the longitudinal direction of the blade rubber, and
the sandwiching member is disposed at a position capable of sandwiching at least a part, into which the blade portion of the lip portion enters, and the position of the sandwiching member with respect to the blade rubber is fixed.

### (Configuration 2)

The blade-rubber regeneration device according to configuration 1, wherein
the sandwiching member is a member that sandwiches a whole region in a longitudinal direction of the lip portion from the both side portions.

### (Configuration 3)

The blade rubber regeneration device according to configuration 1 or 2, wherein assuming that a length from a sandwiched part of the lip portion by the sandwiching member to the tip end of the blade is a length B, the length B is not more than 0.200 mm.

### (Method 4)

A blade-rubber regeneration method, the blade rubber being provided in a wiper blade used for a wiper device of a windshield in a vehicle,
the method comprising:
a process of fixing the blade rubber to the regeneration device according to any one of configurations 1 to 3; and
a process of cutting off a part of a tip end of a lip portion the blade rubber by the regeneration device.

### (Method 5)

A manufacturing method of a regenerated blade rubber for regenerating a blade rubber provided in a wiper blade used for a wiper device of a windshield in a vehicle,
the method comprising:
a process of fixing the blade rubber to the regeneration device according to any one of configurations 1 to 3; and
a process of obtaining the regenerated blade rubber by cutting off a part of a tip end of a lip portion of the blade rubber by the regeneration device.

### (Configuration 6)

A blade-rubber regeneration device, the blade rubber being for a wiper blade, wherein
at least a part of a tip end of the blade rubber constitutes a contact part contacting with a wiping target object,
the regeneration device comprises a blade portion that cuts off the tip end of the blade rubber in a longitudinal direction of the blade rubber,
the regeneration device causes the blade portion to enter the blade rubber from a side portion of the tip end of the blade rubber at an end part A, which is one of end parts in a longitudinal direction of the blade rubber, and to relatively move toward an end part B, which is the other end part in the longitudinal direction, and cuts off the tip end of the blade rubber, and
the regeneration device further comprises:
   a sandwiching member which sandwiches at least a part of the blade rubber from both side portions of the blade rubber on a sectional view of the blade rubber in a direction orthogonal to the longitudinal direction of the blade rubber.

The present disclosure is not limited to the embodiments described above, and various changes and modifications can be made without departing from the spirit and scope of the present disclosure. Accordingly, the following claims are appended to set forth the scope of the present disclosure.

This application claims priority based on Japanese Patent Application No. 2022-156513 filed on September 29, 2022, Japanese Patent Application No. 2022-205755 filed on December 22, 2022, and Japanese Patent Application No. 2023-145277 filed on September 7, 2023, the entire contents of which are hereby incorporated herein by reference.

### REFERENCE SIGNS LIST

3: Lip portion, 20: blade-rubber regeneration device, 21: sandwiching member, 30: cutting unit, 31: blade portion

## Claims

1. A blade-rubber regeneration device, the blade rubber being provided on a wiper blade used for a wiper device of a windshield of a vehicle, wherein
the wiper blade comprises the blade rubber and a blade stay that supports the blade rubber,
the blade rubber comprises a base part, which is an attaching part of attaching the blade rubber to the blade stay, a lip portion, and a neck portion swingably connecting the lip portion to the base part,
at least a part of a tip end of the lip portion constitutes a contact part contacting with the windshield,
the regeneration device comprises a blade portion for cutting off the tip end of the lip portion in a longitudinal direction of the blade rubber,
the regeneration device cuts off a part of the tip end of the lip portion by causing the blade portion to enter the lip portion from a side portion of the tip end of the lip portion at an end part A, which is one of end parts in the longitudinal direction of the blade rubber, and to relatively move toward an end part B, which is the other end part in the longitudinal direction,
the regeneration device comprises a sandwiching member of sandwiching the lip portion,
the sandwiching member sandwiches at least a part of the lip portion from both side portions of the lip portion on a sectional view in a direction orthogonal to the longitudinal direction of the blade rubber, and
the sandwiching member is disposed at a position capable of sandwiching at least a part, into which the blade portion of the lip portion enters, and the position of the sandwiching member with respect to the blade rubber is fixed.

2. The blade-rubber regeneration device according to claim 1, wherein
the sandwiching member is a member that sandwiches a whole region in a longitudinal direction of the lip portion from the both side portions.

3. The blade rubber regeneration device according to claim 1 or 2, wherein assuming that a length from a sandwiched part of the lip portion by the sandwiching member to the tip end of the blade is a length B, the length B is not more than 0.200 mm.

4. A blade-rubber regeneration method, the blade rubber being provided in a wiper blade used for a wiper device of a windshield in a vehicle,
the method comprising:
a process of fixing the blade rubber to the regeneration device according to any one of claims 1 to 3; and
a process of cutting off a part of a tip end of a lip portion the blade rubber by the regeneration device.

5. A manufacturing method of a regenerated blade rubber for regenerating a blade rubber provided in a wiper blade used for a wiper device of a windshield in a vehicle,
the method comprising:
a process of fixing the blade rubber to the regeneration device according to any one of claims 1 to 3; and
a process of obtaining the regenerated blade rubber by cutting off a part of a tip end of a lip portion of the blade rubber by the regeneration device.

6. A blade-rubber regeneration device, the blade rubber being for a wiper blade, wherein
at least a part of a tip end of the blade rubber constitutes a contact part contacting with a wiping target object,
the regeneration device comprises a blade portion that cuts off the tip end of the blade rubber in a longitudinal direction of the blade rubber,
the regeneration device causes the blade portion to enter the blade rubber from a side portion of the tip end of the blade rubber at an end part A, which is one of end parts in a longitudinal direction of the blade rubber, and to relatively move toward an end part B, which is the other end part in the longitudinal direction, and cuts off the tip end of the blade rubber, and
the regeneration device further comprises:
a sandwiching member which sandwiches at least a part of the blade rubber from both side portions of the blade rubber on a sectional view of the blade rubber in a direction orthogonal to the longitudinal direction of the blade rubber.
